# EUROPÄISCHE PATENTSCHRIFT

(11) **EP 0 968 383 B1**
(45) Veröffentlichungstag und Bekanntmachung des Hinweises auf die Patenterteilung: **09.10.2002**
(21) Anmeldenummer: 98913697.3
(22) Anmeldetag: 10.03.1998
(51) Int. Cl.: F16K 31/06, E03C 1/05

(54) **ELEKTRISCH BETRIEBENE ARMATUR**
ELECTRICALLY OPERATED FITTING
ROBINET ACTIONNE ELECTRIQUEMENT

(30) Priorität: 17.03.1997 DE 19710800
(43) Veröffentlichungstag der Anmeldung: 05.01.2000
(73) Patentinhaber: Ideal-Standard GmbH & Co. OHG, 53121 Bonn (DE)
(72) Erfinder: BERGMANN, Konrad, D-54338 Schweich (DE)
(74) Vertreter: Gesthuysen, von Rohr & Eggert
(86) Internationale Anmeldenummer: EP9801384
(87) Internationale Veröffentlichungsnummer: WO98041787

(56) Entgegenhaltungen:
- EP-A- 0 758 702
- DE-A- 3 025 603
- DE-U- 8 810 834
- DE-U- 9 112 255
- DE-U- 29 620 414
- US-A- 5 199 118

## Beschreibung

Die Erfindung betrifft eine elektrisch betriebene Armatur mit einem eine Ventileinrichtung aufweisenden Armaturenkörper, mit einer elektrisch betriebenen Antriebseinrichtung für die Ventileinrichtung und mit einem Gehäuse zur Anbringung an der Installationswand, wobei das Gehäuse den Armaturenkörper und/oder die Antriebseinrichtung zumindest im wesentlichen vollständig überdeckt und wobei am Gehäuse eine Betätigungseinrichtung einer elektronischen Baueinheit zur Ansteuerung der Antriebseinrichtung vorgesehen ist.

Elektrisch betriebene Armaturen der eingangs genannten Art sind bereits aus der DE - U - 88 10 834, der DE - A - 30 25 603 und der DE - U - 296 20 414 bekannt. Bei den bekannten Armaturen befinden sich Schalter am Armaturenkörper zur Betätigung der Antriebseinrichtung. Durch die Anordnung der Schalter am Armaturenkörper ist dieser relativ aufwendig aufgebaut. Außerdem läßt das Design dieser bekannten Armaturen zu wünschen übrig. Schließlich ist eine Reinigung der Armaturen im Bereich der Schalter erschwert.

Aus der US - A - 5,199,118 geht eine Handwaschstation hervor, bei der alle wesentlichen Baueinheiten bzw. -gruppen in einem Gehäuse angeordnet sind. Eine Abdeckung ist dabei nicht vorgesehen.

Aufgabe der Erfindung ist es daher, eine elektrisch betriebene Armatur der eingangs genannten Art zur Verfügung zu stellen, die einfach und kostengünstig unterschiedlichen Anforderungen angepaßt werden kann.

Diese Aufgabe ist bei einer elektrisch betriebenen Armatur der eingangs genannten Art erfindungsgemäß dadurch gelöst, daß eine lösbar mit dem Gehäuse verbindbare Abdeckung zum Aufsetzen auf das Gehäuse und zum im wesentlichen vollständigen Überdecken des Gehäuses vorgesehen ist und daß in der Abdeckung eine die Betätigungseinrichtung freigebende Öffnung vorgesehen ist. Bei der Erfindung wird also die Betätigungseinrichtugn vom Armaturenkörper zu einem separaten Gehäuse hin verlagert, das an der Installationswand angebracht werden kann. Der Armaturenkörper kann daher in an sich bekannter Weise einfach und kostengünstig ausgebildet werden, während das Gehäuse mit der Betätigungseinrichtung zur Betätigung dient und leicht gereinigt werden kann. Das Gehäuse ist im montierten Zustand gegenüber der Installationswand vorzugsweise abgedichtet, so daß Spritzwasser nicht das Gehäuse gelangen und sich dort ansammeln kann.

Das Gehäuse weist nicht nur die Betätigungseinrichtung auf, sondern auch die elektronische Baueinheit, die insbesondere in das Gehäuse integriert, also einteilig mit diesem ausgebildet ist. Das Gehäuse mit der Betätigungseinrichtung und der elektronischen Baueinheit läßt sich als Einheit leicht montieren und im Reparaturfalle entsprechend leicht abnehmen. Durch die innen- und außenseitige Abdichtung der elektronischen Baueinheit gegenüber dem Gehäuse ist sichergestellt, daß es zu keinen Fehlfunktionen kommt.

Um dem Gehäuse ein ansprechendes Design zu geben, ist eine Abdeckung zum Aufsetzen auf das Gehäuse und insbesondere zum im wesentlichen vollständigen Überdecken des Gehäuses vorgesehen. Dabei ist in der Abdeckung eine Öffnung vorgesehen, die die Betätigungseinrichtung am Gehäuse freigibt. Die Abdeckung bietet den Vorteil, daß einerseits Befestigungsstellen, Anschlüsse oder Öffnungen im Gehäuse von außen her nicht sichtbar sind und daß andererseits bei Verwendung eines Gehäusetypen über die Abdeckung unterschiedliche äußere Designs entsprechend dem jeweils gewünschten Geschmack gewählt werden können.

Von besonderem Vorteil ist es, daß das Gehäuse den Armaturenkörper und/oder die Antriebseinrichtung überdeckt und zwar vorzugsweise vollständig. In diesem Falle verschwindet der gesamte Armaturenkörper mit der Antriebseinrichtung hinter dem Gehäuse und ist von außen nicht mehr erkennbar. Bei entsprechender Abdichtung des Gehäuses gegenüber der Installationswand ist dabei gewährleistet, daß Spritzwasser nicht hinter das Gehäuse gelangen kann, was die Funktion der elektrisch betriebenen Armatur beeinträchtigen könnte.

Eine gute Befestigung und sichere Abdichtung des Gehäuses an der Installationswand kann beispielsweise über Schraubverbindungen erfolgen, wobei das Gehäuse an der Installationswand, der Antriebseinrichtung und/oder dem Armaturenkörper befestigt und beim Verschrauben gegen die Installationswand gezogen wird und dort abdichtet.

Bevorzugte Weiterbildungen der Erfindung sind Gegenstand der Unteransprüche.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst.

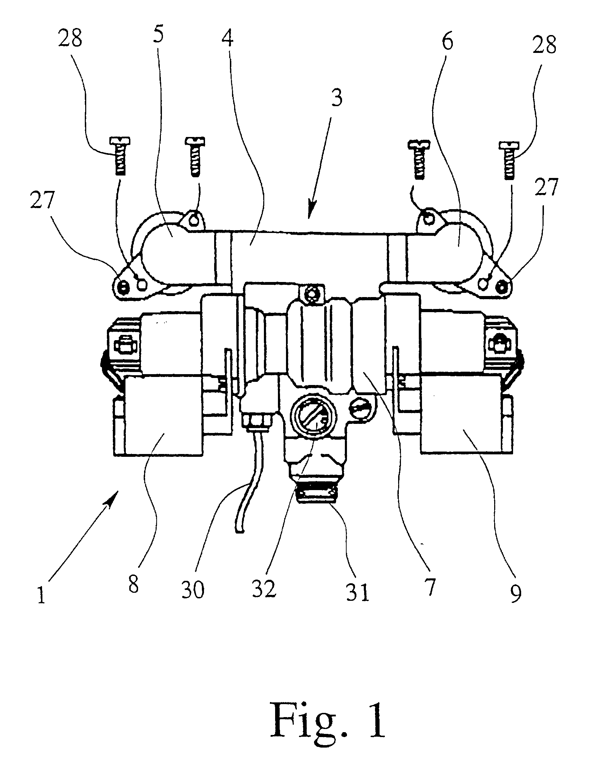

Es zeigt
- Fig. 1: eine Draufsicht auf eine erfindungsgemäße Armatur ohne Gehäuse,
- Fig. 2: eine perspektivische Ansicht der erfindungsgemäßen Armatur mit abgenommenem Gehäuse,
- Fig. 3: eine perspektivische Ansicht der Armatur mit an der Installationswand befestigtem Gehäuse,
- Fig. 4: eine Seitenansicht der erfindungsgemäßen Armatur mit abgeschwenktem Gehäuse und
- Fig. 5: eine perspektivische Ansicht einer erfindungsgemäßen Armatur im zusammengebauten Zustand.

In den Figuren ist jeweils eine elektrisch betriebene Armatur 1 dargestellt, bei der es sich vorliegend um eine Aufputzarmatur zur Anbringung an einer Installationswand 2 handelt. Bei der Armatur könnte es sich aber auch um eine Unterputzarmatur handeln. Die Armatur 1 weist einen Armaturenkörper 3 auf, der mit einem Zulaufgehäuse 4 mit einem Heißwasserzulauf 5 und einem Kaltwasserzulauf 6 versehen ist. Des weiteren weist die Armatur 1 eine Ventileinrichtung 7 auf, die innerhalb des Armaturenkörpers 3 angeordnet und nicht näher dargestellt ist. Die Ventileinrichtung 7 dient vorliegend zum Absperren und Mischen des Wassers.

Während der Heißwasserzulauf 5 und der Kaltwasserzulauf 6 in einer gemeinsamen Zulaufebene liegen, die im eingebauten Zustand der Armatur etwa rechtwinklig zur Installationswand 2 verläuft, ist die Ventileinrichtung 7 nicht in der Zulaufebene, sondern vorliegend unterhalb dieser Zulaufebene angeordnet. Es versteht sich, daß die Ventileinrichtung natürlich auch oberhalb der Zulaufebene angeordnet sein könnte. Durch diese "Untereinander-Anordnung" ergibt sich eine sehr geringe Bautiefe der Armatur 1.

Die im einzelnen nicht näher dargestellte Ventileinrichtung 7 weist vorliegend eine thermostatische Mischventileinheit und eine Absperrventileinheit auf. Die Mischventileinheit dient zum Mischen des Heißwassers und des Kaltwassers zur Erzielung eines Mischwassers vorgegebener Temperatur. Die Absperrventileinheit dient zum Öffnen und Schließen der Armatur 1 und zur Mengenverstellung. Zweckmäßigerweise ist die Absperrventileinheit in Strömungsrichtung hinter der Mischventileinheit angeordnet.

Neben dem Armaturenkörper 3 weist die Armatur 1 noch eine elektrisch betriebene Antriebseinrichtung für die Ventileinrichtung 7 auf. Im dargestellten Ausführungsbeispiel weist die Antriebseinrichtung zwei Stellmotoren 8, 9 auf, die jeweils über ein entsprechendes Getriebe mit der Mischventileinheit bzw. der Absperrventileinheit verbunden sind. Über die Stellmotoren 8, 9 kann die Ventileinrichtung 7 zur Temperatur- und Mengenverstellung verstellt werden.

Wesentlich ist nun, daß der Armatur 1 ein Gehäuse 10 zugeordnet ist, das zur Anbringung und insbesondere zur abdichtenden Anlage an der Installationswand 2 vorgesehen ist. Außenseitig am Gehäuse 10 befindet sich eine Betätigungseinrichtung 11 einer elektronischen Baueinheit 12 zur Ansteuerung der Antriebseinrichtung. Die Betätigungseinrichtung 11 weist eine Tastatur 13 und ein Display 14 auf. Die Tastatur 13 und das Display 14 befinden sich auf einer nicht näher dargestellten Platine, die Teil der elektronischen Baueinheit 12 ist. Das Gehäuse 10 ist vorliegend einteilig mit der Betätigungseinrichtung 11 und der elektrischen Baueinheit 12 ausgebildet. Die Betätigungseinrichtung 11 und auch die elektronische Baueinheit 12 sind dabei sowohl vorder- als auch rückseitig derart gegenüber dem Gehäuse 10 abgedichtet, daß kein Wasser an die elektronischen und elektrischen Bauteile der Betätigungseinrichtung 11 und/oder elektronischen Baueinheit 12 gelangen kann.

Weiterhin ist eine Abdeckung 15 zum Aufsetzen auf das Gehäuse 10 vorgesehen. Die Abdeckung 15 weist eine die Betätigungseinrichtung 11 freigebende Öffnung 16 auf, überdeckt das Gehäuse 10 ansonsten aber vollständig. Im dargestellten Ausführungsbeispiel ist die Abdeckung 15 einteilig in Art eines Deckels ausgebildet. Allerdings sind auch mehrteilige Ausführungen möglich, wobei beispielsweise zwei vertikal verlaufende und zwei horizontal verlaufende Abdeckungsteile vorgesehen sind.

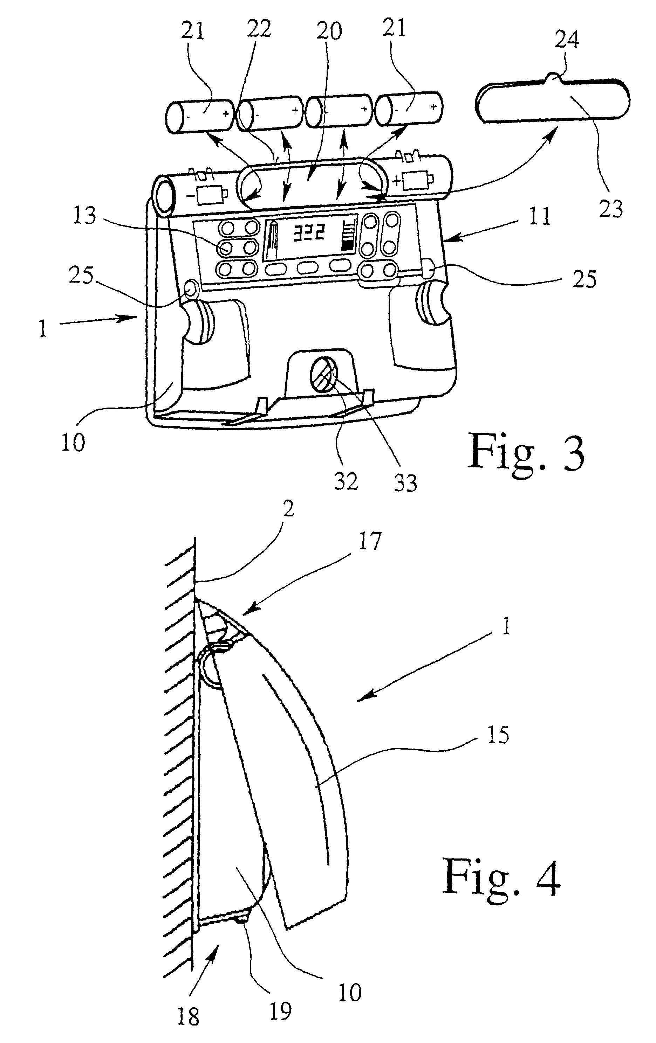

Wie sich insbesondere aus Fig. 4 ergibt, ist die Abdeckung 15 lösbar mit dem Gehäuse 10 verbindbar. Dabei ist zwischen dem Gehäuse 10 und der Abdeckung 15 eine Schwenklagerung 17 vorgesehen, die sich am oberen Ende des Gehäuses 10 befindet. Gegenüberliegend der Schwenklagerung 17, also am unteren Ende von Gehäuse 10 und Abdeckung 15 befindet sich eine Rastverbindung 18. Die Rastverbindung 18 weist vorliegend einen am Gehäuse 10 gelagerten, federbelasteten Rastbolzen 19 und eine nicht dargestellte, zum Rastbolzen 19 korrespondierende Rastöffnung auf.

Die Armatur 1 ist im dargestellten Ausführungsbeispiel batteriebetrieben und weist zu diesem Zweck ein Batteriefach 20 auf. Das Batteriefach 20 hat eine langgestreckte, insbesondere röhrenartige Form. Im Batteriefach 20 können eine Reihe von Batterien 21 zur Versorgung der elektronischen Baueinheit 12 und der Stellmotoren 8, 9 angeordnet werden. Das Batteriefach 20 ist einteilig mit dem Gehäuse 10 ausgebildet. Zum Einsetzen der Batterien 21 weist das röhrenartige Batteriefach 20 eine Einsetzöffnung 22 auf, die über einen Deckel 23 mit Griffabschnitt 24 abdichtend verschlossen werden kann. Der Deckel 23 besteht zweckmäßigerweise aus einem Elastomerwerkstoff oder aber weist randseitig eine entsprechende Dichtung auf, so daß sich eine gute Dichtwirkung ergibt.

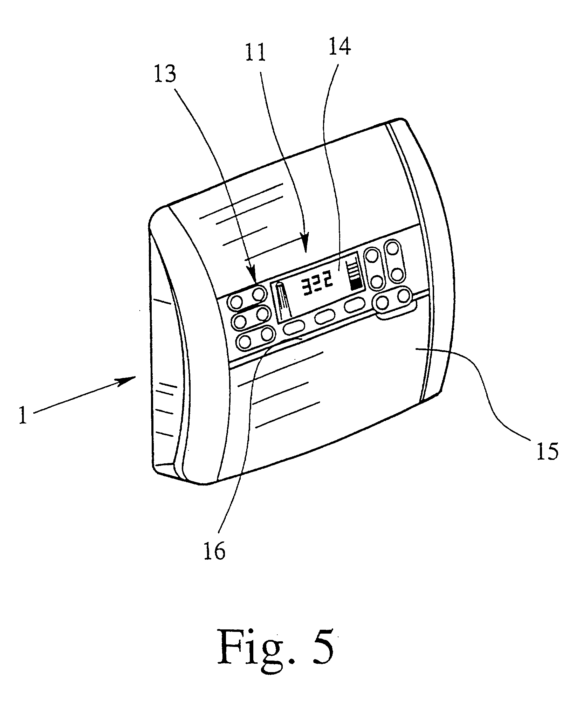

Im dargestellten Ausführungsbeispiel überdeckt das Gehäuse 10 den Armaturenkörper 3 und die Ventileinrichtung 7 vollständig. Bei an der Installationswand 2 angebrachtem Gehäuse 10 und aufgesetzter Abdeckung 15 sind der Armaturenkörper 3 und die Ventileinrichtung 7 nicht erkennbar (vgl. Fig. 5). Neben optisch-ästhetischen Vorteilen ergeben sich dadurch auch praktische Vorteile, da bei entsprechender Abdichtung des Gehäuses 10 gegenüber der Installationswand 2 kein Wasser in den Bereich hinter dem Gehäuse 10 eindringen kann. Es darf allerdings darauf hingewiesen werden, daß es nicht notwendigerweise erforderlich ist, daß das Gehäuse zur Abdeckung des Armaturenkörpers oder der Ventileinrichtung verwendet wird. Das Gehäuse mit der Betätigungseinrichtung und gegebenenfalls der elektronischen Baueinheit kann dem Armaturenkörper auch lediglich zugeordnet und an anderer Stelle angebracht sein. Auch ist es möglich, daß das Gehäuse den Armaturenkörper oder die Ventileinrichtung nur teilweise überdeckt, die Abdeckung diese Bauteile jedoch vollständig überdeckt.

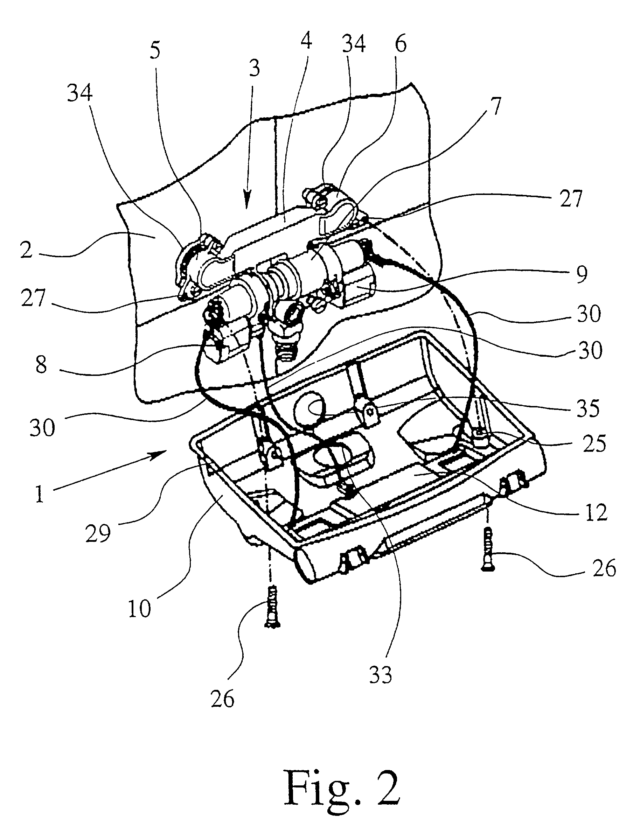

Das Gehäuse 10 ist vorliegend mit dem Armaturenkörper 3 verschraubt. Zu diesem Zweck sind, wie aus Fig. 2 ersichtlich, Schrauben 26 vorgesehen, die von außen her über entsprechende Öffnungen 25 im Gehäuse 10 in entsprechende Gewindebohrungen 27 am Armaturenkörper 3 einschraubbar sind. Der Vorteil dieser Art der Befestigung liegt darin, daß lediglich der Armaturenkörper 3 einer Befestigung an der Installationswand 2 über entsprechende Schraubverbindungen mit Schrauben 28 bedarf. Es müssen also keine zusätzlichen Bohrungen in der Installationswand 2 zur Befestigung des Gehäuses 10 vorgesehen werden. Beim Anziehen der Schrauben 26 zur Befestigung des Gehäuses 10 wird dieses dann gegen die Installationswand 2 gepreßt. Zur Erzielung einer guten Dichtwirkung sollte dabei eine Dichtung zwischen dem Gehäuse 10, vorzugsweise im Bereich des umlaufenden äußeren Randes 29 und der Installationswand 2 vorgesehen sein.

Die elektrische Verbindung zwischen der elektronischen Baueinheit 12 bzw. dem Batteriefach 20 mit den Stellmotoren 8, 9 erfolgt vorliegend über Anschlußkabel 30 mit entsprechenden Steckverbindungen. Durch Verwendung der Steckverbindungen kann der elektrische Anschluß in einfacher Weise hergestellt werden.

Wie zuvor ausgeführt worden ist, ergibt sich durch die "Untereinander-Anordnung" des Zulaufgehäuses 4 und der Ventileinrichtung 7 eine besonders flachbauende Armatur 1. Damit die flache Bauweise auch bei Verwendung des Gehäuses 10 beibehalten werden kann, ist die elektronische Baueinheit 12 im eingebauten Zustand des Gehäuses 10 vor dem vergleichsweise flachen Zulaufgehäuse 4 angeordnet, während sich das Batteriefach 20 oberhalb des Zulaufgehäuses 4 befindet. Auf diese Weise ist der freie Raum zwischen dem Armaturenkörper 3 und der Außenseite des Gehäuses 10 optimal ausgenutzt, da unterhalb des Zulaufgehäuses 4 des Armaturenkörpers 3 die vergleichsweise tiefe Ventileinrichtung 7 mit den Stellmotoren 8, 9 vorgesehen ist.

Im Bereich des Auslaufs 31 des Armaturenkörpers 3 ist eine manuell betätigbare Absperrung 32 vorgesehen. Die manuelle Absperrung 32 dient zur Betätigung der Armatur 1, wenn die motorbetriebene, nicht dargestellte Absperrventileinheit versagen sollte. Um die Absperrung 32 in einfacher Weise bedienen zu können, ist im Gehäuse 10 eine entsprechende Öffnung 33 vorgesehen, so daß nach Abnahme der Abdeckung 15 die Absperrung 32 zugänglich ist und beispielsweise über ein Werkzeug betätigt werden kann, ohne daß es der Demontage des Gehäuses 10 bedarf.

Die Montage der erfindungsgemäßen Armatur 1 läuft nun folgendermaßen ab. Zunächst wird der Armaturenkörper 3 mit entsprechenden Exzenteranschlüssen 34, die bei einer Aufputzarmatur aus der Installationswand 2 ragen, über die Schrauben 28 verschraubt. Sodann werden die Anschlußkabel 30 einerseits mit dem Gehäuse 10 und andererseits mit den Stellmotoren 8, 9 verbunden (vgl. Fig. 2). Anschließend wird. das Gehäuse 10 mit dem Armaturenkörper 3 über die Schrauben 26 verschraubt und dabei gegen die Installationswand 2 gepreßt. In diesem Zustand ragt der Auslauf 31 aus einer entsprechenden, an der Unterseite des Gehäuses 10 vorgesehenen Öffnung 35.

Nachdem das Gehäuse 10 befestigt worden ist, können die Batterien 21 in das Batteriefach 20 eingelegt werden. Danach wird das Batteriefach 20 über den Deckel 23 verschlossen. Nun wird beispielsweise ein Brauseschlauch am Auslauf 31 befestigt, während zwischen dem Auslauf 31 und der Öffnung 35 zweckmäßigerweise eine Dichtung angeordnet wird. Schließlich wird die Abdeckung 15 auf das Gehäuse 10 erst aufgesetzt und dann aufgeschwenkt, bis der Rastbolzen 19 einrastet. Es ergibt sich dann der in Fig. 5 dargestellte Zustand.

Über die Betätigungseinrichtung 11 kann die Armatur 1 dann betätigt werden. Die elektronische Baueinheit 12 ist dabei derart ausgebildet, daß über die Tastatur 13 der Betätigungseinrichtung 11 die Funktionen Öffnen, Schließen, Mengen- und Temperatureinstellung eingestellt werden können. Des weiteren ist es auch möglich, bestimmte individuell benutzerbezogene Programme einzugeben. Die Einstellung der gewünschten Mischwassermenge bzw. -temperatur oder des jeweils gewünschten Programms erfolgt über entsprechende Druck- und/der Näherungsschalter der Tastatur 13.

## Patentansprüche

1. Elektrisch betriebene Armatur (1) mit einem eine Ventileinrichtung (7) aufweisenden Armaturenkörper (3), mit einer elektrisch betriebenen Antriebseinrichtung für die Ventileinrichtung (7) und mit einem Gehäuse (10) zur Anbringung an der Installationswand (2), wobei das Gehäuse (10) den Armaturenkörper (3) und/oder die Antriebseinrichtung zumindest im wesentlichen vollständig überdeckt und wobei am Gehäuse (10) eine Betätigungseinrichtung (11) einer elektronischen Baueinheit (12) zur Ansteuerung der Antriebseinrichtung vorgesehen ist, **dadurch gekennzeichnet, daß** eine lösbar mit dem Gehäuse (10) verbindbare Abdeckung (15) zum Aufsetzen auf das Gehäuse (10) und zum im wesentlichen vollständigen Überdecken des Gehäuses (10) vorgesehen ist und daß in der Abdeckung (15) eine die Betätigungseinrichtung (11) freigebende Öffnung (16) vorgesehen ist.

2. Elektrisch betriebene Armatur nach Anspruch 1, **dadurch gekennzeichnet, daß** die elektronische Baueinheit (12) am Gehäuse (10) befestigt, vorzugsweise mit dem Gehäuse (10) einteilig ausgebildet und abdichtend darin eingesetzt ist.

3. Elektrisch betriebene Armatur nach Anspruch 1 oder 2, **dadurch gekennzeichnet, daß** die Abdeckung (15) auf das Gehäuse (10) aufschwenkbar ist und vorzugsweise gegenüberliegend der Schwenklagerung eine Rastverbindung (18) zwischen dem Gehäuse (10) und der Abdeckung (15) vorgesehen ist.

4. Elektrisch betriebene Armatur nach einem der Ansprüche 1 bis 3, **dadurch gekennzeichnet, daß** die Armatur (1) batteriebetrieben ist, vorzugsweise am Gehäuse (10) ein Batteriefach (20) zur Aufnahme wenigstens einer Batterie (21) vorgesehen ist und vorzugsweise das Batteriefach (20) nur bei abgenommener Abdeckung (15) zugänglich ist.

5. Elektrisch betriebene Armatur nach Anspruch 4, **dadurch gekennzeichnet, daß** das insbesondere röhrenförmig ausgebildete Batteriefach (20) eine Einsetzöffnung (22) zum Einsetzen der wenigstens einen Batterie (21) aufweist und ein vorzugsweise aus einem Elastormerwerkstoff bestehender Deckel (23) zum abdichtenden Verschließen der Einsetzöffnung (22) vorgesehen ist.

6. Elektrisch betriebene Armatur nach einem der Ansprüche 1 bis 5, **dadurch gekennzeichnet, daß** das Gehäuse (10) an der Installationswand (2), der Antriebseinrichtung und/oder dem Armaturenkörper (3) vorzugsweise über Schraubverbindungen befestigt ist und vorzugsweise das Gehäuse (10) derart ausgebildet ist, daß es beim Befestigen gegen die Installationswand (2) gepreßt wird.

7. Elektrisch betriebene Armatur nach einem der Ansprüche 1 bis 6, **dadurch gekennzeichnet, daß** die elektronische Baueinheit (12) über Steckverbindungen aufweisende Anschlußkabel (30) mit der Antriebseinrichtung verbunden ist.

8. Elektrisch betriebene Armatur nach Anspruch 6 oder 7, **dadurch gekennzeichnet, daß** die Ventileinrichtung (7) und die Antriebseinrichtung unterhalb eines Zulaufgehäuses (4) des Armaturenkörpers (3) für Heiß- und Kaltwasser vorgesehen ist, daß die elektronische Baueinheit (12) vor dem Zulaufgehäuse (4) angeordnet ist, und vorzugsweise das Batteriefach (20) oberhalb des Zulaufgehäuses (4) angeordnet ist.

9. Elektrisch betriebene Armatur nach einem der Ansprüche 1 bis 8, **dadurch gekennzeichnet, daß** im Bereich des Auslaufs (31) eine manuell betätigbare Absperrung (32) vorgesehen ist, vorzugsweise im Gehäuse eine Öffnung (33) zum Betätigen der Absperrung (32) vorgesehen ist und vorzugsweise die Öffnung (33) nur bei abgenommener Abdeckung (15) zugänglich ist.

10. Elektrisch betriebene Armatur nach einem der Ansprüche 1 bis 9, **dadurch gekennzeichnet, daß** die elektronische Baueinheit (12) derart ausgebildet ist, daß eine Mengen- und Temperatureinstellung des Wassers und/oder individuelle benutzerbezogene Programme einstellbar sind.

11. Elektrisch betriebene Armatur nach einem der Ansprüche 1 bis 10, **dadurch gekennzeichnet, daß** das Gehäuse (10) zur abdichtenden Anlage an der Installationswand (2) vorgesehen ist.

## Claims

1. Electrically operated fitting (1) with a fitting body (3) having a valve means (7) and an electrically operated drive means for the valve means (7) and a housing (10) for attachment to the installation wall (2), wherein the housing (10) at least essentially completely covers the fitting body (3) and/or the drive means and wherein an actuation device (11) of an electronic module (12) is provided on the housing (10) for triggering the drive means, **characterized in that** a removable cover (15) is provided that can be connected to the housing (10) for attachment to the housing (10) and for essentially completely covering the housing (10) and that an actuation device (11) is provided in an opening (16) in the cover (15).

2. Electrically operated fitting according to claim 1, **characterized in that** the electronic module (12) is attached to the housing (10), is preferably made integral with the housing (10) and is inserted sealed therein.

3. Electrically operated fitting according to claim 1 or 2, **characterized in that** the cover (15) can be swiveled onto the housing, and preferably, opposite the swivel bearing there is a catch connection (18) between the housing (10) and the cover (15).

4. Electrically operated fitting according to any one of claims 1 to 3, **characterized in that** the fitting (1) is battery-operated, wherein preferably there is a battery compartment (20) on the housing (10) for holding at least one battery (21), and wherein preferably the battery compartment (20) is accessible only with the cover (15) removed.

5. Electrically operated fitting according to claim 4, **characterized in that** the battery compartment (20), which is made especially tubular, has an insertion opening (22) for insertion of at least one battery (21), and wherein there is a cover (23) that consists preferably of an elastomer material for sealing the insertion openings (22).

6. Electrically operated fitting according to any one of claims 1 to 5, **characterized in that** the housing (10) is attached to the installation wall (2), the drive means and/or fitting body (3) preferably via screw connections, and wherein preferably the housing (10) is made such that when attached it is pressed against the installation wall (2).

7. Electrically operated fitting according to any one of claims 1 to 6, **characterized in that** the electronic unit (12) is connected to the drive means via connecting cables (30) that have plug connectors.

8. Electrically operated fitting according to claim 6 or 7, **characterized in that** the valve means (7) and the drive means are located underneath a supply housing (4) of the fitting body (3) for the hot and cold water, that the electronic module (12) is located in front of the supply housing (4) and that preferably the battery compartment (20) is located above the supply housing (4).

9. Electrically operated fitting according to any one of claims 1 to 8, **characterized in that** there is a manually actuated cutoff (32) in the area of the outlet (31), that preferably there is an opening (33) in the housing to operate the cutoff (32) and that preferably the opening (33) is accessible only when the cover (15) has been removed.

10. Electrically operated fitting according to any one of claims 1 to 9, **characterized in that** the electronic unit (12) is made such that the amount and temperature of the water and/or individual user-related programs can be set.

11. Electrically operated fitting according to any one of claims 1 to 10, **characterized in that** the housing (10) for the sealing unit is provided on the installation wall (2)

## Revendications

1. Organe de robinetterie (1) actionné électriquement équipé d'un corps d'organe de robinetterie (3) présentant un système de vanne (7), d'un dispositif d'entraînement actionné électriquement pour le système de vanne (7) et d'un boîtier (10) pour l'application sur la paroi d'installation (2), moyennant quoi le boîtier (10) recouvre au moins presque complètement le corps d'organe de robinetterie (3) et/ou le dispositif d'entraînement et un système d'actionnement (11) d'un module (12) électronique est prévu sur le boîtier (10) pour la commande du dispositif d'entraînement, **caractérisé en ce qu'**un couvercle (15) pouvant être relié de façon amovible avec le boîtier (10) est prévu pour être posé sur le boîtier (10) et pour recouvrir presque complètement le boîtier (10) et **en ce qu'**une ouverture (16) libérant le système d'actionnement (11) est prévue dans le couvercle (15).

2. Organe de robinetterie actionné électriquement selon la revendication 1, **caractérisé en ce que** le module (12) électronique est fixé sur le boîtier (10), est réalisé de préférence d'un seul tenant avec le boîtier (10) et est inséré dedans en assurant l'étanchéité.

3. Organe de robinetterie actionné électriquement selon la revendication 1 ou 2, **caractérisé en ce que** le couvercle (15) peut basculer sur le boîtier (10) et une liaison à encliquetage (18) est prévue entre le boîtier (10) et le couvercle (15), de préférence en face du logement basculant.

4. Organe de robinetterie actionné électriquement selon l'une quelconque des revendications 1 à 3, **caractérisé en ce que** l'organe de robinetterie (1) est actionné par piles, un compartiment à piles (20) pour le logement d'au moins une pile (21) est prévu de préférence sur le boîtier (10) et le compartiment à piles (20) est accessible de préférence seulement lorsque le couvercle (15) est enlevé.

5. Organe de robinetterie actionné électriquement selon la revendication 4, **caractérisé en ce que** le compartiment à piles (20) conçu en particulier en forme de tuyau présente une ouverture d'insertion (22) pour l'insertion d'au moins une pile (21) et un couvercle (23) à base de préférence d'un matériau élastomère est prévu pour la fermeture étanche de l'ouverture d'insertion (22).

6. Organe de robinetterie actionné électriquement selon l'une quelconque des revendications 1 à 5, **caractérisé en ce que** le boîtier (10) est fixé sur la paroi d'installation (2), le système d'entraînement et/ou le corps d'organe de robinetterie (3), de préférence au moyen d'assemblages vissés et le boîtier (10) est fixé de préférence de telle façon qu'il soit pressé lors de la fixation contre la paroi d'installation (2).

7. Organe de robinetterie actionné électriquement selon l'une quelconque des revendications 1 à 6, **caractérisé en ce que** le module (12) électronique est relié au système d'entraînement au moyen de câbles de raccordement (30) présentant des connexions par fiches.

8. Organe de robinetterie actionné électriquement selon la revendication 6 ou 7, **caractérisé en ce que** le système de vanne (7) et le dispositif d'entraînement sont prévus au-dessous d'un boîtier d'arrivée (4) du corps d'organe de robinetterie (3) pour l'eau chaude et l'eau froide, **en ce que** le module (12) électronique est disposé en amont du boîtier d'arrivée (4) et le compartiment à piles (20) est disposé de préférence au-dessus du boîtier d'arrivée (4).

9. Organe de robinetterie actionné électriquement selon l'une quelconque des revendications 1 à 8, **caractérisé en ce qu'**il est prévu un système d'arrêt (32) pouvant être actionné manuellement dans la zone de la sortie (31), une ouverture (33) est prévue de préférence dans le boîtier pour l'actionnement du système d'arrêt (32) et l'ouverture (33) n'est accessible de préférence qu'avec le couvercle (15) enlevé.

10. Organe de robinetterie actionné électriquement selon l'une quelconque des revendications 1 à 9, **caractérisé en ce que** le module (12) électronique est conçu de façon qu'un réglage de quantité et de température et/ou des programmes individuels spécifiques à l'utilisateur puissent être ajustés.

11. Organe de robinetterie actionné électriquement selon l'une quelconque des revendications 1 à 10, **caractérisé en ce que** le boîtier (10) est prévu pour l'appui étanche sur la paroi d'installation (2).
